# EUROPÄISCHE PATENTANMELDUNG

(11) **EP 3 446 902 A1**
(43) Veröffentlichungstag der Anmeldung: **27.02.2019**
(21) Anmeldenummer: 17187800.2
(22) Anmeldetag: 24.08.2017
(51) Int. Cl.: B60J 1/00, B60J 7/043, B62D 65/00

(54) **VERFAHREN ZUM UMBAU EINES FAHRZEUGES, FAHRZEUG UND FAHRZEUGDACH**

(71) Anmelder: Adria Mobil, d.o.o., 8000 Novo Mesto (SI)
(72) Erfinder: Kastrevc, Anton, 8000 Novo mesto (SI)
(74) Vertreter: Bals, Rüdiger

(57) **Zusammenfassung**

Die Erfindung betrifft ein Verfahren zum Umbau eines Fahrzeuges (100), insbesondere eines Kleintransporters.

Erfindungsgemäß ist vorgesehen, dass das Verfahren folgende Schritte umfasst:
a) Entfernen zumindest eines Teils einer Dachinnenverkleidung wenigstens in einem (111) Bereich einer Fahrerkabine (101) und
b) Bereitstellen mindestens einer Öffnung (10) in einem Fahrzeugdach (110) zumindest im Bereich (111) der Fahrerkabine (101), insbesondere zwischen den B-Säulen (B) des Fahrzeuges (100) und einer Windschutzscheibe (103) der Fahrerkabine (101).

## Beschreibung

Die Erfindung betrifft ein Verfahren zum Umbau eines Fahrzeuges, insbesondere eines Kleintransporters, nach dem Oberbegriff des unabhängigen Verfahrensanspruches. Ferner betrifft die Erfindung ein Fahrzeug, insbesondere einen Kleintransporter, nach dem Oberbegriff des ersten unabhängigen Erzeugnisanspruches. Außerdem betrifft die Erfindung ein Fahrzeugdach für ein Fahrzeug, insbesondere einen Kleintransporter, nach dem Oberbegriff des weiteren unabhängigen Erzeugnisanspruches.

Fahrzeuge, bspw. Kleintransporter, die zum Transport von Personen oder Gütern ausgelegt sind, sind grundsätzlich bekannt. Als Kleintransporter bezeichnet man Transporter bzw. Nutzfahrzeuge mit einem zulässigen Gesamtgewicht bis ung. 3,5 Tonnen. Zu den Kleintransportern zählen bspw. Lieferwagen, Kastenwagen, Kleinbusse, Kombimobile oder Wohnmobile. Mit anderen Worten können als Kleintransporter leichte Lastkraftwagen bezeichnet werden. Grundsätzlich sind solche Fahrzeuge für einen bestimmten Zweck aufgebaut, bspw. als Freizeitfahrzeuge zum Wohnen beim Camping oder im Urlaub mit wechselnden Standorten, für den Transport des Materialbedarfs eines Handwerksbetriebs, für den Post-Zustellbetrieb oder dergleichen. Ähnlich wie Lastkraftwagen werden die Kleintransporter mit einer Fahrerkabine und einem daran anschließenden Nutzraum ausgebildet.

Es ist Aufgabe der Erfindung, die oben beschriebenen Fahrzeuge, insbesondere Kleintransporter, zu verbessern. Insbesondere ist es die Aufgabe der vorliegenden Erfindung, eine erweiterte Funktionalität sowie eine erweiterte Nutzbarkeit der Fahrzeuge, insbesondere der Kleintransporter, bereitzustellen und vorzugsweise den Komfort im Betrieb der Fahrzeuge, insbesondere der Kleintransporter, sowie deren Erscheinungsbild zu verbessern. Weiterhin ist es Aufgabe der vorliegenden Erfindung ein entsprechendes Fahrzeug, insbesondere einen Kleintransporter, zur Verfügung zu stellen, welches einfach und kostengünstig aufgebaut ist, welches einfach und ohne großen Montageaufwand bereitgestellt werden kann und welches eine erweiterte Funktionalität sowie Nutzbarkeit und ein verbessertes Erscheinungsbild sowie einen verbesserten Komfort aufweist. Zudem ist es Aufgabe der Erfindung, ein Fahrzeugdach für ein Fahrzeug, insbesondre einen Kleintransporter, bereitzustellen, welches eine erweiterte Funktionalität und eine erweiterte Nutzbarkeit der Fahrzeuge, insbesondere der Kleintransporter, ermöglicht und vorzugsweise den Komfort im Betrieb der Fahrzeuge, insbesondere der Kleintransporter, sowie deren Erscheinungsbild verbessert.

Die voranstehende Aufgabe wird gelöst durch ein Verfahren mit den Merkmalen des unabhängigen Verfahrensanspruches, insbesondere aus dem kennzeichnenden Teil, ein Fahrzeug, insbesondere einen Kleintransporter, mit den Merkmalen des entsprechenden unabhängigen Erzeugnisanspruches, insbesondere aus dem kennzeichnenden Teil, sowie ein Fahrzeugdach für ein Fahrzeug, insbesondre einen Kleintransporter, mit den Merkmalen des entsprechenden unabhängigen Erzeugnisanspruches, insbesondere aus dem kennzeichnenden Teil.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben worden sind, selbstverständlich auch im Zusammenhang mit dem erfindungsgemäßen Fahrzeug oder mit dem erfindungsgemäßen Fahrzeugdach und jeweils umgekehrt, sodass bezüglich der Offenbarung zu den einzelnen Erfindungsaspekten stets wechselseitig Bezug genommen wird bzw. werden kann.

Die Erfindung stellt ein Verfahren zum Umbau eines Fahrzeuges, insbesondere eines Kleintransporters, bereit, wobei das Verfahren folgende Schritte umfasst:
a) Entfernen zumindest eines Teils einer Dachinnenverkleidung wenigstens in einem Bereich einer Fahrerkabine und
b) Bereitstellen mindestens einer Öffnung in einem Fahrzeugdach zumindest im Bereich der Fahrerkabine, insbesondere zwischen den B-Säulen des Fahrzeuges und einer Windschutzscheibe der Fahrerkabine.

Somit kann das Fahrzeug, insbesondere der Kleintransporter verbessert werden. Vorteilhafterweise kann dadurch die Funktionalität des Fahrzeuges erweitert werden. Der Erfindungsgedanke liegt dabei darin, dass das Fahrzeug an unterschiedliche Zwecke leicht und ohne großen Aufwand angepasst werden kann, z. B. zum Einsatz als ein Lieferwagen, ein Kastenwagen, ein Kleinbus, ein Kombimobil oder ein Wohnmobil. In manchen Fahrzeugen, wird im Bereich zwischen einem oberen Dachblech und einer inneren Dachverkleidung der Raum verschenkt. Durch Entfernen der Dachinnenverkleidung kann dieser Raum für weitere Funktionen auf eine vorteilhafte Weise wieder zur Verfügung gestellt werden. Durch Bereitstellen einer Öffnung im Fahrzeugdach zumindest im Bereich der Fahrerkabine kann außerdem der Vorteil erreicht werden, dass die Fahrerkabine besser ausgeleuchtet wird, wodurch der Komfort und Nutzen beim Bedienen des Fahrzeuges erhöht wird.

Im Rahmen der Erfindung kann unter einem Kleintransporter ein Transporter bzw. ein Nutzfahrzeug mit einem zulässigen Gesamtgewicht bis ca. 7,5 Tonnen, insbesondre bis ca. 3,5 Tonnen, und unterschiedlichen Achsabständen, Dachversionen, Türkonfigurationen etc., hier insbesondere mit erhöhtem Dach und einer resultierenden Laderaum- bzw. Stehhöhe von min. 1,80m, vorzugsweise 1,90m oder mehr verstanden werden, welcher bzw. welches als ein Lieferwagen, ein Kastenwagen, ein Kleinbus, ein Kombimobil oder ein Wohnmobil dienen kann.

Ferner kann im Rahmen der Erfindung vorgesehen sein, dass das Verfahren mindestens einen weiteren Schritt aufweist:
a1) Entfernen eines Querträgers zwischen den B-Säulen des Fahrzeuges.

In manchen Fahrzeugen wird zwischen den B-Säulen des Fahrzeuges ein Querträger eingebaut, der zur Stabilität des Fahrzeugaufbaus dient. Durch ein Entfernen dieses Querträgers wird der Bauraum gewonnen, der für weitere Funktionen und/oder für ein verbessertes Raumgefühl ausgenutzt werden kann. Nach einem Vorteil der Erfindung kann im Bereich des fehlenden Querträgers ein Adapterrahmen und/oder eine speziell angepasste Innenverkleidung eingebaut werden, die nicht nur die die erforderliche Stabilität des Fahrzeugaufbaus wiederherstellen, sondern auch die erweiterte Funktionalität und/oder das verbesserte Raumgefühl liefert.

Weiterhin kann die Erfindung vorsehen, dass im Schritt a) die Öffnung durch Einschneiden in das, bspw. vorhandene oder ersatzweise zu installierende, Fahrzeugdach bereitgestellt wird. Dadurch kann das Bereitstellen der Öffnung besonders einfach und flexibel ausgeführt werden.

Des Weiteren kann die Erfindung vorsehen, dass im Schritt a) die Öffnung im Fahrzeugdach durch Ersetzen mindestens eines Bereiches des vorhandenen Fahrzeugdaches durch ein Ersatzbauteil bereitgestellt wird. Somit kann die Öffnung auf eine besonders elegante Weise bereitgestellt werden. Hierzu ist kein aufwendiges Werkzeug erforderlich, sodass der Endkunde das Fahrzeug selbst, oder eine Werkstatt, umbauen kann.

Zudem kann ein Verfahren im Sinne der Erfindung mindestens einen weiteren Schritt aufweisen:
c) Anbringen eines Adapterrahmens für ein Fenster an der Öffnung im Fahrzeugdach, vorzugsweise von einer Innenseite des Fahrzeugdaches.

Ein Anbringen eines Adapterrahmens kann mehrere Vorteile mit sich bringen, wie Verstärken des Fahrzeugaufbaus und Ermöglichen eines Fensteraufbaues. Wenn der Adapterrahmen von einer Innenseite des Fahrzeugdaches angebracht wird, kann der Adapterrahmen gemäß einem Ausführungsbeispiel der Erfindung durch ein Zusammenspiel mit dem Fenster beim Aufnehmen des Fensters, bspw. von einer Außenseite des Fahrzeuges, am Fahrzeugdach befestigt werden, indem die Kante des Fahrzeugdachs am Rande der Öffnung z. B. zwischen dem Adapterrahmen und dem Fenster eingeklemmt wird. Hierzu können am Adapterrahmen und am Fenster korrespondierende Rastelemente vorgesehen sein. Zudem ist es denkbar, dass zwischen dem Adapterrahmen und dem Fenster eine Labyrinthführung vorgesehen sein kann, sodass das Fenster durch Einschieben am Adapterrahmen an diesem zuverlässig befestigt werden kann. Eine Labyrinthführung kann zudem dazu dienen, die Öffnung abzudichten. Außerdem ist es möglich, dass separate und/oder zusätzliche Befestigungselemente, bspw. Befestigungsbügel oder Befestigungsklammer, vorgesehen sein können, um das Fenster am Adapterrahmen zu befestigen. Ferner ist es denkbar, dass der Adapterrahmen von der Außenseite und das Fenster von einer Innenseite am Fahrzeugdach befestigt werden können. Gleichwohl ist es aber auch denkbar, dass sowohl der Adapterrahmen als auch das Fenster beide von der Außenseite oder beide von der Innenseite des Fahrzeugdaches an diesem befestigt werden können. Zudem ist es möglich, dass separate und/oder zusätzliche Fixiermittel vorgesehen sein können, um das Fenster und/oder den Adapterrahmen am Fahrzeugdach form- und/oder kraftschlüssig zu befestigen. Weiterhin ist denkbar, dass das Fenster und/oder den Adapterrahmen stoffschlüssig, bspw. durch Kleben, am Fahrzeugdach befestigt wird.

Darüber hinaus kann der Adapterrahmen mindestens ein Dichtungselement für die Öffnung, ein Insektenschutzelement für die Öffnung, ein Verschattungselement für ein Fenster oder ein Verstärkungselement zumindest in einer Fahrzeuglängsachse, in einer Fahrzeugquerachse oder in einer Fahrzeughochachse für das Fahrzeugdach bereitstellen. Somit kann der Adapterrahmen weitere vorteilhafte Funktionen für das Fenster und das Fahrzeugdach mit sich bringen.

Ferner kann ein Verfahren im Sinne der Erfindung mindestens einen weiteren Schritt aufweisen:
d) Anbringen eines Fensters, vorzugsweise von einer Außenseite des Fahrzeugdaches, und Befestigen des Fensters an einem Adapterrahmen an der Öffnung im Fahrzeugdach.

Ein Anbringen eines Fensters an der Öffnung im Fahrzeugdach sorgt dafür, dass zumindest die Fahrerkabine mit einem natürlichen Licht auf eine angenehme Weise ausgeleuchtet werden kann. Dadurch kann der Benutzerkomfort des Fahrzeuges gesteigert werden. Wenn das Fenster von einer Außenseite des Fahrzeugdaches angebracht wird, kann dadurch der Vorteil erreicht werden, dass das Fenster nur durch Zusammenwirken mit dem Adapterrahmen, welcher bspw. von einer Innenseite, am Fahrzeugdach angebracht wird, am Adapterrahmen und darüber am Fahrzeugdach befestigt wird. Somit kann ein einfaches und ein schnelles Aufrüsten des Fahrzeugdaches mit einem Fenster, zumindest im Bereich der Fahrerkabine, vorzugsweise anschließen an die Frontwindschutzscheibe, bevorzugt noch vor den B-Säulen des Fahrzeuges, ermöglicht werden. Gleichwohl ist es aber auch denkbar, dass das Fenster von der Innenseite und der Adapterrahmen von der Außenseite am Fahrzeugdach befestigt werden können. Gleichwohl ist es aber auch denkbar, dass sowohl der Adapterrahmen als auch das Fenster von derselben Seite am Fahrzeugdach befestigt werden können. Sowohl das Fenster als auch der Adapterrahmen können durch separate und/oder zusätzliche Fixiermittel am Fahrzeugdach fixiert werden. Ferner ist es möglich, dass das Fenster und/oder der Adapterrahmen stoffschlüssig, bspw. durch Kleben, am Fahrzeugdach befestigt wird.

Weiterhin kann der Adapterrahmen dazu dienen, das Fenster klappbar oder verschiebbar am Adapterrahmen zu befestigen oder fest im Adapterrahmen anzubringen. Durch eine klappbare oder verschiebbare Befestigung des Fensters am Adapterrahmen kann eine weitere Lüftungsmöglichkeit für das Fahrzeug, insbesondere für die Fahrerkabine, geschaffen werden. Ein fest im Adapterrahmen angebrachtes Fenster kann eine kostengünstige und einfache Möglichkeit im Aufbau darstellen.

Des Weiteren kann ein Verfahren im Sinne der Erfindung mindestens einen weiteren Schritt aufweisen:
e) Anbringen einer Innenverkleidung von einer Innenseite des Fahrzeugdaches, die an die Öffnung angepasst ist.

Dadurch kann das Erscheinungsbild des umgebauten Fahrzeugdaches an der Öffnung verbessert werden.

Zudem ist es denkbar, dass die Innenverkleidung mindestens ein Funktionselement, ein Beleuchtungselement, ein Ablageelement oder einen Liegeplatz, bspw. in Form eines stationären oder ausbaubaren Dachbodens, umfassen kann. Somit kann die Innenverkleidung weitere vorteilhafte Funktionen für das Fahrzeug und das Fahrzeugdach bereitstellen.

Außerdem kann im Rahmen der Erfindung vorgesehen sein, dass im Schritt a) eine erste Öffnung im Bereich der Fahrerkabine, insbesondere zwischen den B-Säulen des Fahrzeuges und einer Windschutzscheibe der Fahrerkabine, bereitgestellt wird, und/oder dass eine zweite Öffnung im Bereich des Nutzraumes, insbesondere zwischen den B-Säulen und den C-Säulen des Fahrzeuges bereitgestellt wird, oder dass eine Kombinationsöffnung im Bereich der Fahrerkabine, insbesondere zwischen den B-Säulen des Fahrzeuges und einer Windschutzscheibe der Fahrerkabine, und im Bereich des Nutzraumes, insbesondere zwischen den B-Säulen und den C-Säulen des Fahrzeuges, bereitgestellt wird. Dadurch kann das Fahrzeug flexibel an unterschiedliche Einsatzzwecke angepasst werden.

Ferner wird die erfindungsgemäße Aufgabe durch ein Fahrzeug, insbesondere durch einen Kleintransporter, gelöst, wobei das Fahrzeug mithilfe eines Verfahrens umgebaut ist, welches wie oben beschrieben verlaufen kann. Mithilfe des erfindungsgemäßen Fahrzeuges werden die gleichen Vorteile erreicht, die oben im Zusammenhang mit dem erfindungsgemäßen Verfahren beschrieben wurden. Zur Vermeidung von Wiederholungen wird vorliegend vollumfänglich darauf Bezug genommen.

Weiterhin wird die erfindungsgemäße Aufgabe durch ein Fahrzeugdach für ein Fahrzeug, insbesondere einen Kleintransporter, gelöst, wobei im Fahrzeugdach mindestens eine Öffnung zumindest in einem Bereich einer Fahrerkabine des Fahrzeuges, insbesondere zwischen den B-Säulen des Fahrzeuges und einer Windschutzscheibe der Fahrerkabine vorgesehen ist. Mithilfe des erfindungsgemäßen Fahrzeugdaches werden die gleichen Vorteile erreicht, die oben im Zusammenhang mit dem erfindungsgemäßen Verfahren beschrieben wurden, auf welche vorliegend vollumfänglich darauf Bezug genommen wird. Bei einem erfindungsgemäßen Fahrzeugdach kann es sich um ein vorhandenes Fahrzeugdach oder ein Ersatzbauteil handeln.

Des Weiteren kann im Rahmen der Erfindung vorgesehen sein, dass die Öffnung im Fahrzeugdach eingeschnitten ist, und/oder das Fahrzeugdach als ein Ersatzbauteil mit der Öffnung ausgebildet ist. Dadurch kann eine Vielfalt an Möglichkeiten geschaffen werden, um die Öffnung im Fahrzeugdach bereitzustellen.

Zudem ist es im Rahmen der Erfindung bei einem Fahrzeugdach möglich, dass an der Öffnung im Fahrzeugdach ein Adapterrahmen für ein Fenster vorgesehen ist, welches vorzugsweise an einer Innenseite des Fahrzeugdaches befestigt ist. Durch den Adapterrahmen kann eine vereinfachte Montage des Fensters am Fahrzeugdach ermöglicht werden. Weiterhin ist es von Vorteil, dass mithilfe des Adapterrahmens eine Art Baukastens geschaffen wird, um eine bequeme Montage des Fensters am Fahrzeugdach zu gewährleisten.
Außerdem kann der Adapterrahmen im Sinne der Erfindung mindestens ein Dichtungselement für die Öffnung, ein Insektenschutzelement für die Öffnung, ein Verschattungselement für ein Fenster oder ein Verstärkungselement zumindest in einer Fahrzeuglängsachse, in einer Fahrzeugquerachse oder in einer Fahrzeughochachse für das Fahrzeugdach aufweisen. Das Dichtungselement sorgt vorteilhafterweise dafür, dass das innere des Fahrzeuges trotz der Öffnung im Fahrzeugdach zuverlässig vor Witterungseinflüssen geschützt ist. Ein Verschattungselement sorgt für eine einstellbare Intensität des durch das Fenster einfallenden Lichtes. Ein Verstärkungselement zumindest in einer Fahrzeuglängsachse, in einer Fahrzeugquerachse oder in einer Fahrzeughochachse für das Fahrzeugdach sorgt vorteilhafterweise dafür, dass der Fahrzeugaufbau stabilisiert wird und der verfügbare Raum im Fahrzeug beinahe bis zum oberen Dachblech funktional ausgenutzt wird.

Im Rahmen der Erfindung ist es denkbar, dass der Adapterrahmen aus einer Metalllegierung, bspw. Stahl, oder aus einem Leichtmetall, bspw. Aluminium oder Magnesium, oder aus einem Kunststoff, bspw. Hartplastik oder Duroplast, vorzugsweise oder aus einem faserverstärkten Kunststoff, wie z. B. GFK, PU, PU-RRIM, PA etc., ausgebildet ist. Ein Adapterrahmen aus einer Metalllegierung, insbesondere aus Stahl, ist vorteilhafterweise stabil. Ein Adapterrahmen aus einem Leichtmetall, bspw. aus Aluminium, ist vorteilhaft, um ein leichtes Bauteil bereitzustellen. Ein Adapterrahmen aus Kunststoff ist günstig in der Herstellung und weist eine hohe Gestaltungsfreiheit auf, wobei durch verwenden von Hartplastik, vorzugsweise Duroplast, ein stabiles Bauteil bereitgestellt werden kann. Faserverstärkte Kunststoffe können die Stabilität des Adapterrahmens erhöhen.

Ferner kann die Erfindung bei einem Fahrzeugdach vorsehen, dass an der Öffnung im Fahrzeugdach ein Fenster, vorzugsweise von einer Außenseite des Fahrzeugdaches, angebracht und an einem Adapterrahmen befestigt ist. Dadurch kann der Innenraum im Fahrzeug, insbesondere in der Fahrerkabine, mit einem natürlichen Licht ausgeleuchtet werden, wodurch der Benutzerkomfort gesteigert werden kann.

Weiterhin kann die Erfindung bei einem Fahrzeugdach vorsehen, dass der Adapterrahmen mit einem Befestigungsmechanismus ausgelegt ist, um das Fenster klappbar oder verschiebbar am Adapterrahmen zu befestigen oder fest im Adapterrahmen anzubringen. Somit kann den Kundenwünschen auf eine flexible Weise entsprochen werden.

Des Weiteren kann die Erfindung vorsehen, dass das Fenster mindestens mehrschichtig oder mehrfach verglast, vorzugsweise mit einer Außenscheibe und einer Innenscheibe, ausgebildet ist. Durch ein mehrschichtiges Fenster kann ein multifunktionales Fenster ermöglicht werden. Durch ein mehrfach verglastes Fenster kann ein gut isoliertes Fenster bereitgestellt werden.

Zudem ist es denkbar, dass das Fenster mindestens eine, vorzugsweise mechanisch und/oder elektrisch steuerbare, Funktionsschicht oder eine Anzeigeeinheit zum Bereitstellen von Informationen aufweist. Durch eine mechanisch, bspw. durch Drücken, und/oder elektrisch, bspw. durch Anlegen von Strom, steuerbare Funktionsschicht, z. B. eine LCD-Schicht, kann eine steuerbare Verschattung- und/oder eine Einblickschutz- und/oder eine Wärmedämmfunktion am Fenster ermöglicht werden. Gleichwohl ist es aber auch denkbar, dass die Funktionsschicht, automatisch auf die Intensität des einfallenden Lichtes reagieren kann, die von der Sonneneinstrahlung abhängig ist. Eine Anzeigeeinheit, bspw. in Form eines Displays, kann weitere Funktionen erfüllen, z. B. Anzeigen von Navigation- und/oder Wetterdaten. Die Anzeigeeinheit kann als eine Multifunktionsanzeige ausgebildet sein und zum Anzeigen von unterschiedlichen Informationen dienen.

Ferner kann die Erfindung bei einem Fahrzeugdach vorsehen, dass an einer Innenseite des Fahrzeugdaches eine Innenverkleidung angeordnet ist, die an die Öffnung angepasst ist. Die Innenverkleidung kann zur optischen Zwecken und/oder zur funktionalen Zwecken eingesetzt werden. Denkbar ist unter anderem, dass die Innenverkleidung mindestens ein Funktionselement, ein Beleuchtungselement, ein Ablageelement oder einen Liegeplatz, bspw. in Form eines stationären oder ausbaubaren Dachbodens, aufweisen kann. Ein Beleuchtungselement kann zum Ausleuchten des Innenraumes des Fahrzeuges in der Dunkelheit dienen. Ein Ablageelement kann zum Verstauen von Gegenständen dienen. Ein Liegeplatz kann in Rastsituationen eine Möglichkeit zum Ausruhen liefern. Ein ausklappbarer Liegeplatz ist weiterhin vorteilhaft, um den Liegeplatz nur bei Bedarf zu nutzen und anderenfalls den Raum für den Liegeplatz anders zu nutzen.

Weiterhin kann die Erfindung bei einem Fahrzeugdach vorsehen, dass eine erste Öffnung im Bereich einer Fahrerkabine des Fahrzeuges, insbesondere zwischen den B-Säulen des Fahrzeuges und einer Windschutzscheibe der Fahrerkabine, ausgebildet ist, und/oder dass eine zweite Öffnung im Bereich des Nutzraumes, insbesondere zwischen den B-Säulen und den C-Säulen des Fahrzeuges, ausgebildet ist, oder dass eine Kombinationsöffnung im Bereich einer Fahrerkabine des Fahrzeuges, insbesondere zwischen den B-Säulen des Fahrzeuges und einer Windschutzscheibe der Fahrerkabine, und im Bereich des Nutzraumes, insbesondere zwischen den B-Säulen und den C-Säulen des Fahrzeuges, ausgebildet ist.

Weitere, die Erfindung verbessernde Maßnahmen ergeben sich aus der nachfolgenden Beschreibung der Ausführungsbeispiele der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumliche Anordnung und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: ein mögliches Ausführungsbeispiel eines erfindungsgemäßen Fahrzeugdaches als Teil eines oder als ein Ersatzteil für ein Fahrzeug, insbesondere einen Kleintransporter, mit einer Öffnung in einem vorderen Fahrkabinenbereich,
- Figur 2: ein weiteres Ausführungsbeispiel eines erfindungsgemäßen Fahrzeugdaches als Teil eines oder als ein Ersatzteil für ein Fahrzeug, insbesondere einen Kleintransporter, mit einer Öffnung in einem hinteren Nutzraumbereich,
- Figur 3: ein weiteres mögliches Ausführungsbeispiel eines erfindungsgemäßen Fahrzeugdaches als Teil eines oder als ein Ersatzteil für ein Fahrzeug, insbesondere einen Kleintransporter, mit einer Kombinationsöffnung in einem vorderen Fahrkabinenbereich und in einem hinteren Nutzraumbereich,
- Figur 4: ein erfindungsgemäßes Fahrzeugdach als Teil eines oder als ein Ersatzteil für ein Fahrzeug, insbesondere einen Kleintransporter, in einer Explosionsansicht, und
- Figur 5: eine vereinfachte Darstellung eines erfindungsgemäßen Fahrzeugdaches als Teil eines oder als ein Ersatzteil für ein Fahrzeug, insbesondere einen Kleintransporter, in einer Ansicht von einer Innenseite.

In den nachfolgenden Figuren werden für die gleichen technischen Merkmale auch für unterschiedliche Ausführungsbeispiele die identischen Bezugszeichen verwendet.

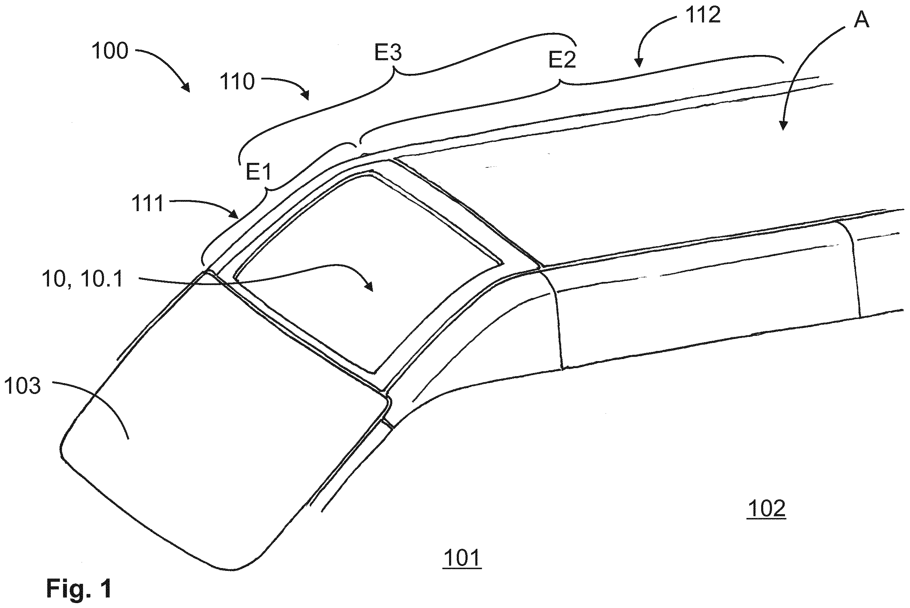

Die Figuren 1 bis 5 zeigen ein Fahrzeugdach 110 eines Fahrzeuges 100, insbesondere eines Kleintransporters, im Sinne der Erfindung, welches mithilfe eines erfindungsgemäßen Verfahrens aus einem vorhandenen Fahrzeugdach umgebaut oder als ein Ersatzbauteil E1, E2, E3 bereitgestellt wird. Das Fahrzeug 100 ist dabei nicht im Detail dargestellt. Als Fahrzeug 100 kann dabei ein Kleintransporter bzw. ein Nutzfahrzeug verstanden werden, welches mit einem zulässigen Gesamtgewicht bis ca. 7,5 Tonnen, insbesondere bis ca. 3,5 Tonnen, und unterschiedlichen Achsabständen, Dachversionen, Türkonfigurationen etc., hier insbesondere mit erhöhtem Dach und einer resultierenden Laderaum- bzw. Stehhöhe von min. 1,80m, vorzugsweise 1,90m oder mehr ausgebildet sein und welches als ein Lieferwagen, ein Kastenwagen, ein Kleinbus, ein Kombimobil oder ein Wohnmobil dienen kann.

Gemäß einem Verfahren im Sinne der Erfindung wird das Fahrzeug 100 umgebaut, indem folgende Schritte ausgeführt werden:
a) Entfernen zumindest eines Teils einer Dachinnenverkleidung wenigstens in einem Bereich 111 einer Fahrerkabine 101 und
b) Bereitstellen mindestens einer Öffnung 10 im Fahrzeugdach 110 zumindest im Bereich 111 der Fahrerkabine 101, insbesondere zwischen den B-Säulen des Fahrzeuges 100 und einer Windschutzscheibe 103 der Fahrerkabine 101.

Somit kann das Fahrzeug 100, vorzugsweise der Kleintransporter, verbessert werden, indem seine Funktionalität erweitert wird. Erfindungsgemäß wird das Fahrzeug 100 an unterschiedliche Zwecke leicht und ohne großen Aufwand angepasst, z. B. zum Einsatz als ein Lieferwagen, ein Kastenwagen, ein Kleinbus, ein Kombimobil oder ein Wohnmobil. In manchen Fahrzeugen 100 wird im Bereich zwischen einem oberen Dachblech und einer inneren Dachverkleidung ein ungenutzter Raum gebildet. Durch Entfernen der herkömmlichen Dachinnenverkleidung kann mithilfe des erfindungsgemäßen Verfahrens dieser Raum für weitere Funktionen zur Verfügung gestellt werden. Durch Bereitstellen einer Öffnung 10 im Fahrzeugdach 110 zumindest im Bereich 111 der Fahrerkabine 101 kann die Fahrerkabine 101 auf eine angenehme Weise mit einem natürlichen Sonnenlicht ausgeleuchtet werden.

Zudem kann das Verfahren einen weiteren Schritt vorsehen, der bspw. zwischen dem Schritt a) und dem Schritt b) ausgeführt werden kann:
a1) Entfernen eines Querträgers zwischen den B-Säulen des Fahrzeuges 100.

In manchen Fahrzeugen 100 wird zwischen den B-Säulen des Fahrzeuges 100 ein Querträger eingebaut, der zur Stabilität des Fahrzeugaufbaus dient. Durch Entfernen dieses Querträgers wird der Bauraum für weitere Funktionen und/oder für ein verbessertes Raumgefühl sowie für eine verbesserte Durchgangsfreiheit (Höhe) vom hinteren Fahrzeugnutzraum bzw. dem seitlichen Laderaum- bzw. Passagier- bzw. Wohnraumtür zu den vorderen Sitzen (Fahrer- bzw. Beifahrer) im Sinne der Erfindung freigegeben.

Die erfindungsgemäße Öffnung 10 kann durch Einschneiden in das, bspw. vorhandene oder ersatzweise zu installierende, Fahrzeugdach 110 oder durch ein Ersatzbauteil E1, E2, E3 bereitgestellt werden. Die Öffnung 10 kann den Vorteil mit sich bringen, dass daran ein Fenster 30 befestigt werden kann.

Wie es die Figur 1 schematisch zeigt, kann eine erste Öffnung 10.1 im Bereich 111 der Fahrerkabine 101, insbesondere zwischen den B-Säulen des Fahrzeuges 100 und einer Windschutzscheibe 103 der Fahrerkabine 101, bereitgestellt werden. In diesem Bereich 111 der Fahrerkabine 101 kann das Fahrzeugdach 110 ansteigen und schließlich in einen ebenen Bereich 112 eines Nutzungsraumes 102 übergehen, welcher als Laderaum, Passagierraum, Stauraum und/oder Wohnraum genutzt werden kann. Im ansteigenden Bereich 111 der Fahrerkabine 101 ist eine erfindungsgemäße Öffnung 10, zusätzlich zur Windschutzscheibe 103 besonders vorteilhaft, weil dadurch flach einfallende Lichtstrahlen einer untergehenden oder aufsteigenden Sonne aufgefangen werden können, ohne den Fahrer zu blenden. Somit kann die erste Öffnung 10.1 eine angenehme Beleuchtung für die Fahrerkabine 101, insbesondere in späteren Abend- oder in früheren Morgenstunden, bereitstellen.

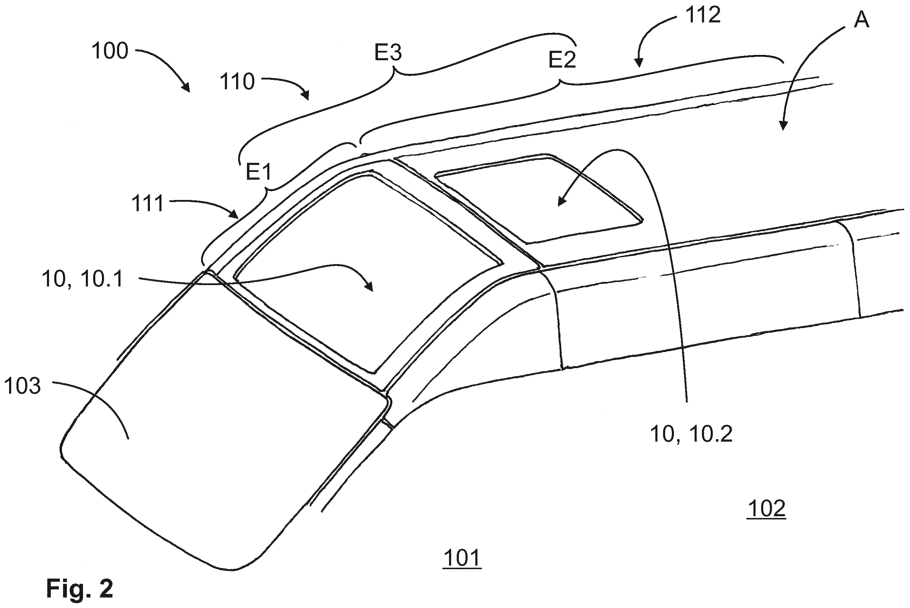

Wie es die Figur 2 weiterhin schematisch zeigt, kann eine zweite Öffnung 10.2 im Bereich 112 des Nutzraumes 102, insbesondere zwischen den B-Säulen und den C-Säulen des Fahrzeuges 100 anstelle der ersten Öffnung 10.1 bereitgestellt werden. Durch die zweite Öffnung 10.2 kann der Nutzraum 102 des Fahrzeuges 100 beleuchtet werden.

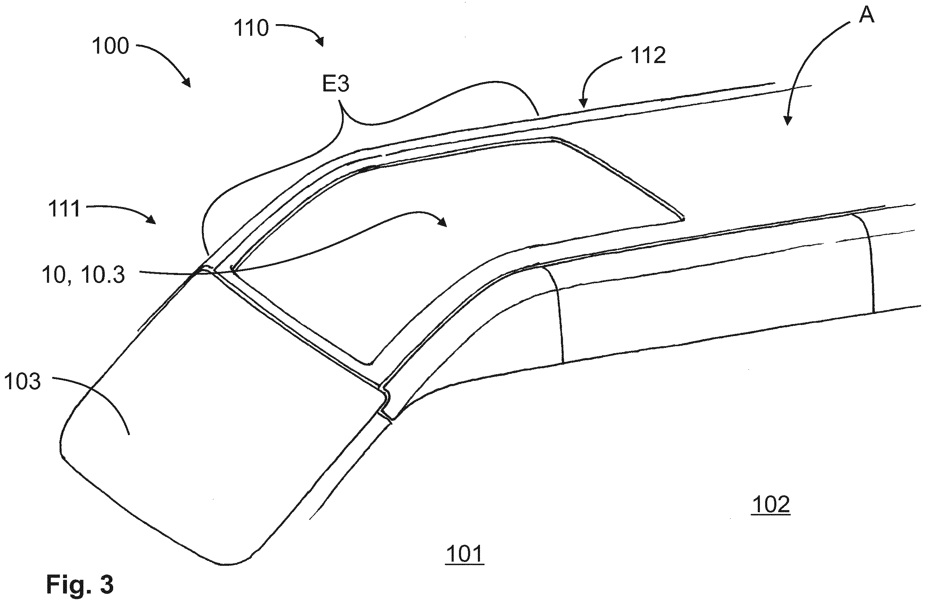

Wie es die Figur 3 des Weiteren zeigt, kann eine Kombinationsöffnung 10.3 im Bereich der Fahrerkabine 101, insbesondere zwischen den B-Säulen des Fahrzeuges 100 und der Windschutzscheibe 103 der Fahrerkabine 101, und im Bereich des Nutzraumes 102, insbesondere zwischen den B-Säulen und den C-Säulen des Fahrzeuges 100, bereitgestellt werden.

Mithilfe von unterschiedlichen Öffnungen 10.1, 10.2, 10.3 kann das Fahrzeug 100 flexibel an unterschiedliche Einsatzzwecke und Kundenwünsche angepasst werden.

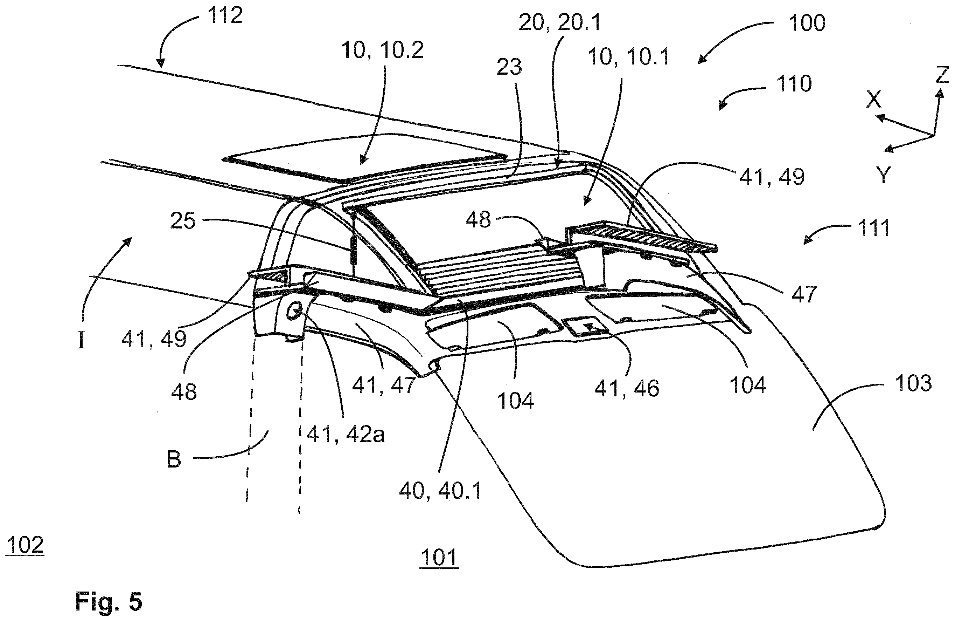

Gemäß einem Verfahren im Sinne der Erfindung kann mindestens ein weiterer Schritt vorgesehen sein:
c) Anbringen eines Adapterrahmens 20 für ein Fenster 30 an der Öffnung 10 im Fahrzeugdach 110, bspw. von einer Innenseite I des Fahrzeugdaches 110, die in der Figur 5 gezeigt ist.

Durch den Adapterrahmen 20 kann der Fahrzeugaufbau trotz diverser Öffnungen 10.1, 10.2, 10.3 stabilisiert und vorzugsweise verstärkt werden. Wenn der Adapterrahmen 20 von einer Innenseite I des Fahrzeugdaches 110 angebracht wird, kann der Adapterrahmen 20 gemäß einer Ausführungsmöglichkeit durch Aufnehmen eines Fensters 30 am Fahrzeug 100 befestigt werden. Hierbei kann eine Kante des Fahrzeugdaches 110 am Rande der Öffnung 10 zwischen dem Adapterrahmen 20 und dem Fenster 30 eingeklemmt werden. Weiterhin ist es denkbar, dass das Fester 30 von innen und der Adapterrahmen 20 von außen befestigt werden können. Zudem ist es denkbar, dass das Fenster 30 und der Adapterrahmen 20 von der gleichen Seite befestigt werden können. Noch weiter ist es denkbar, dass zur Befestigung des Fensters 30 und/oder des Adapterrahmens 20 am Fahrzeugdach 110 separate Fixiermittel (nicht dargestellt) oder ein Klebstoff benutzt werden können.

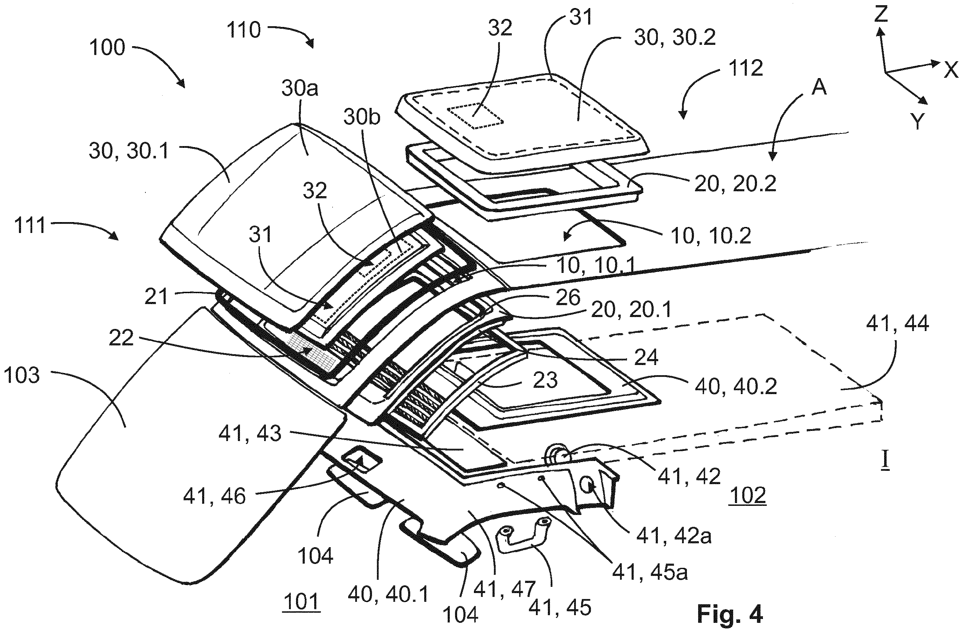

Um das Fenster 30 am Adapterrahmen 20 zu befestigen, können am Adapterrahmen 20 und am Fenster 30 korrespondierende Rastelemente 26 vorgesehen sein, die materialeinheitlich und/oder monolithisch an dem jeweiligen Bauteil 20, 30 angeformt oder separat bereitgestellt werden können. In der Ansicht der Figur 4 ist ein Rastelement 26 am Adapterrahmen 20 sichtbar. Zudem oder stattdessen kann zwischen dem Adapterrahmen 20 und dem Fenster 30 eine Labyrinthführung vorgesehen sein, um das Fenster 30 durch Einschieben am Adapterrahmen 20 zu befestigen. Eine Labyrinthführung kann zudem die Öffnung 10 abdichten.

Alternativ kann der Adapterrahmen 20 von der Außenseite A und das Fenster 30 von einer Innenseite I am Fahrzeugdach 110 befestigt werden. Gleichwohl ist es aber auch denkbar, dass beide Bauteile 20, 30 von einer Seite, nämlich von der Innenseite I oder Außenseite A, des Fahrzeugdaches 110 befestigt werden können. Hierzu können separate Fixiermittel vorgesehen sein.

Der Adapterrahmen 20 kann ähnlich wie die Öffnung 10 mindestens einen ersten Adapterrahmen 20.1 für die erste Öffnung 10.1, einen zweiten Adapterrahmen 20.2 für die zweite Öffnung 10.2 oder einen Kombinationsrahmen für eine Kombinationsöffnung 10.3 umfassen.

Der Adapterrahmen 20 kann aus einem Metall, bspw. Stahl oder Aluminium, oder aus einem Kunststoff, bspw. Hartplastik oder Duroplast, ausgebildet sein.

Wie es weiterhin die Figur 4 zeigt, kann der Adapterrahmen 20 mindestens ein Dichtungselement 21 für die jeweilige Öffnung 10 umfassen. In der Figur 4 ist lediglich schematisch ein Dichtungselement 21 für die erste Öffnung 10.1 gezeigt, wobei für jede Öffnung 10 jeweils ein Dichtungselement 21 vorgesehen sein kann. Das Dichtungselement 21 kann für einen Schutz gegen Witterungseinflüsse sorgen.

Zudem kann der Adapterrahmen 20 ein Insektenschutzelement 22 für die jeweilige Öffnung 10 aufweisen. Angedeutet in der Figur 4 ist ein Insektenschutzelement 22 für die zweite Öffnung 10.2, wobei grundsätzlich an jeder Öffnung 10 jeweils ein Insektenschutzelement 22 vorgesehen sein kann, an der ein offenbares Fenster 30 angebracht ist.

Außerdem kann der Adapterrahmen 20 mindestens ein Verschattungselement 23 für das Fenster 30 oder ein Verstärkungselement 24 zumindest in einer Fahrzeuglängsachse x, in einer Fahrzeugquerachse y oder in einer Fahrzeughochachse z für das Fahrzeugdach 110 aufweisen. Ein Verschattungselement 23 kann für eine, bspw. mechanisch, einstellbare Intensität und/oder Menge des durch das Fenster 30 einfallenden Lichtes sorgen. In der Ansicht der Figur 4 ist nur ein Verstärkungselement 24 in der Fahrzeuglängsachse x sichtbar. Verstärkungselemente 24 können für eine verbesserte Stabilität des Fahrzeugaufbaus in der jeweiligen Fahrzeugachse x, y, z dienen.

Gemäß einem Verfahren im Sinne der Erfindung kann mindestens ein weiterer Schritt vorgesehen sein:
d) Anbringen des Fensters 30, vorzugsweise von einer Außenseite A des Fahrzeugdaches 110, und Befestigen des Fensters 30 am Adapterrahmen 20 an der Öffnung 10 im Fahrzeugdach 110.

Der Adapterrahmen 20 kann ferner dazu ausgelegt sein, bspw. mit einem Befestigungsmechanismus 25, welcher in der Figur 5 schematisch angedeutet ist, das Fenster 30 klappbar oder verschiebbar am Adapterrahmen 20 zu befestigen oder fest im Adapterrahmen 20 anzubringen, um unterschiedlichen Kundenwünschen auf eine flexible Weise entsprechen zu können.

Das Fenster 30 kann für die jeweilige Öffnung 10.1, 10.2, 10.3 mindestens ein erstes Fenster 30.1, ein zweites Fenster 30.2 oder ein Kombinationsfenster umfassen.

Wie es die Figur 4 des Weiteren zeigt, kann das Fenster 30 zumindest zweifach verglast und bspw. mit einer Außenscheibe 30a und einer Innenscheibe 30b ausgebildet sein. Dadurch kann eine Wärmeisolation für den Innenraum des Fahrzeuges 100 gegenüber dem Außenraum gewährleistet werden.

Weiterhin ist es im Rahmen der Erfindung denkbar, dass das Fenster 30 mehrschichtig ausgebildet bzw. mindestens eine, vorzugsweise mechanisch und/oder elektrisch steuerbare, Funktionsschicht 31 oder eine Anzeigeeinheit 32 zum Bereitstellen von Informationen an den Benutzer des Fahrzeuges 100 aufweisen kann. Die Funktionsschicht 31 kann bspw. an einer Innenseite I des Fensters 30 ausgebildet sein, bspw. durch Versetzen des Fensters 30 mit steuerbaren LCD-Partikeln oder durch Aufkleben einer LCD-Folie am Fenster 30 oder dergleichen. Die Funktionsschicht 31 kann durch einen Benutzer, bspw. durch Druck oder durch Anlegen einer elektrischen Spannung, steuerbar ausgebildet sein. Zudem ist es denkbar, dass die Funktionsschicht 31 ihre Lichtdurchlässigkeit automatisch an die Intensität des einfallenden Lichtes anpassen kann. Weiterhin ist es denkbar, dass die Funktionsschicht 31 als eine Rasterstruktur in die Innenscheibe 30b eingebracht, bspw. eingefräst werden kann, um das einfallende Licht zu streuen und somit die Lichtdurchlässigkeit des Fensters 30 zu reduzieren. Eine Anzeigeeinheit 32, bspw. in Form eines beispielhaft dargestellten Displays, kann weitere Funktionen erfüllen und z. B. Anzeigen von Navigation- und/oder Wetterdaten dienen.

Gemäß einem Verfahren im Sinne der Erfindung kann mindestens ein weiterer Schritt vorgesehen sein:
e) Anbringen einer Innenverkleidung 40 von einer Innenseite I des Fahrzeugdaches 110, die an die Öffnung 10 angepasst ist.

Die Innenverkleidung 40 kann zur optischen Zwecken und/oder zur funktionalen Zwecken eingesetzt werden. Denkbar ist unter anderem, dass die Innenverkleidung 40 mindestens ein Funktionselement 41, wie z. B. ein Beleuchtungselement 42, ein Ablageelement 43 in einer Fahrzeugquerrichtung y (s. Figur 4), mindestens ein Ablageelement 49 in einer Fahrzeuglängsrichtung x, ggf. mit jeweils einer korrespondierenden Rüttelkante 48, (s. Figur 5) oder einen Liegeplatz 44, bspw. in Form eines stationären oder ausbaubaren Dachbodens, aufweisen. Ein Beleuchtungselement 42 kann zum seitlichen Ausleuchten des Innenraumes des Fahrzeuges 100 dienen. Ein Ablageelement 43, 49 kann zum Verstauen von Gegenständen dienen. Ein Liegeplatz 44 kann in Rastsituationen für den Benutzer eine Möglichkeit zum Ausruhen liefern. Ein ausklappbarer Liegeplatz 44 kann vorteilhaft sein, um den Liegeplatz 44 bei Bedarf zu nutzen und in anderen Situationen den Raum für den Liegenplatz 44 für weitere Funktionen zu nutzen.

Weiterhin ist es denkbar, dass die Innenverkleidung 40 zumindest seitliche Verstärkungselemente 47 als weitere Funktionselemente 41 aufweisen kann, um den Fahrzeugaufbau zumindest in der Fahrzeuglängsrichtung x zu stabilisieren und/oder um die Innenverkleidung 40 am Fahrzeugdach 110 zu befestigen.

Zudem kann die Innenverkleidung 40 eine entsprechende Aufnahme 46 als ein weiteres Funktionselement 41 für ein Innenbeleuchtungselement der Fahrerkabine 101 aufweisen.

Weiterhin kann die Innenverkleidung 40 zum Anbringen von Sonnenblenden 104 und/oder von Haltegriffen 45, bspw. mit entsprechenden Öffnungen 45a als weitere Funktionselemente 41, ausgebildet sein.

Die Innenverkleidung 40 kann an die jeweilige Öffnung 10.1, 10.2, 10.3 angepasst sein und mindestens eine erste Innenverkleidung 40.1 für die erste Öffnung 10.1, eine zweite Innenverkleidung 40.2 für die zweite Öffnung 10.2 oder eine Kombinationsverkleidung für eine Kombinationsöffnung 10.3 umfassen.

Die Figuren 4 und 5 zeigen das Ausführungsbeispiel der Erfindung aus der Figur 2 mit einer ersten Öffnung 10.1 im Bereich 111 der Fahrerkabine 101 und einer zweiten Öffnung 10.2 im Bereich 112 des Nutzraumes 102 des Fahrzeuges 100.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Fahrzeug
- 101: Fahrerkabine
- 102: Nutzraum
- 103: Windschutzscheibe
- 104: Sonnenblende

- 110: Fahrzeugdach
- 111: Fahrkabinenbereich
- 112: Nutzraumbereich

- 10: Öffnung
- 10.1: erste Öffnung im Bereich der Fahrerkabine
- 10.2: zweite Öffnung im Bereich des Nutzraumes
- 10.3: Kombinationsöffnung im Bereich der Fahrerkabine und im Bereich des Nutzraumes

- 20: Adapterrahmen
- 20.1: erster Adapterrahmen
- 20.2: zweiter Adapterrahmen
- 21: Dichtungselement
- 22: Insektenschutzelement
- 23: Verschattungselement
- 24: Verstärkungselement
- 25: Befestigungsmechanismus
- 26: Rastelement

- 30: Fenster
- 30.1: erstes Fenster
- 30.2: zweites Fenster
- 30a: Außenscheibe
- 30b: Innenscheibe
- 31: Funktionsschicht
- 32: Anzeigeeinheit

- 40: Innenverkleidung
- 40.1: erste Innenverkleidung
- 40.2: zweite Innenverkleidung
- 41: Funktionselement
- 42: Beleuchtungselement
- 42a: Aufnahme für das Beleuchtungselement
- 43: Ablageelement
- 44: Liegeplatz
- 45: Haltegriff
- 45a: Aufnahmen für den Haltegriff
- 46: Aufnahme für ein Innenbeleuchtungselement
- 47: Verstärkungselement
- 48: Rüttelkante
- 49: Ablageelement

- B: B-Säule

- E1: erstes Ersatzbauteil
- E2: zweites Ersatzbauteil
- E3: kombiniertes Ersatzbauteil

- I: Innenseite des Fahrzeugdaches
- A: Außenseite des Fahrzeugdaches

- x: Fahrzeuglängsachse
- y: Fahrzeugquerachse
- Z: Fahrzeughochachse

## Patentansprüche

1. Verfahren zum Umbau eines Fahrzeuges (100), insbesondere eines Kleintransporters, **dadurch gekennzeichnet,**
**dass** das Verfahren folgende Schritte umfasst:
a) Entfernen zumindest eines Teils einer Dachinnenverkleidung wenigstens in einem (111) Bereich einer Fahrerkabine (101) und
b) Bereitstellen mindestens einer Öffnung (10) in einem Fahrzeugdach (110) zumindest im Bereich (111) der Fahrerkabine (101), insbesondere zwischen den B-Säulen (B) des Fahrzeuges (100) und einer Windschutzscheibe (103) der Fahrerkabine (101).

2. Verfahren nach dem vorhergehenden Anspruch,
**dadurch gekennzeichnet,**
**dass** das Verfahren mindestens einen weiteren Schritt aufweist:
a1) Entfernen eines Querträgers zwischen den B-Säulen (B) des Fahrzeuges (100).

3. Verfahren nach einem der vorhergehenden Ansprüche,
**dadurch gekennzeichnet,**
**dass** im Schritt a) die Öffnung (10) durch Einschneiden in das Fahrzeugdach (110) bereitgestellt wird.

4. Verfahren nach einem der vorhergehenden Ansprüche,
**dadurch gekennzeichnet,**
**dass** im Schritt a) die Öffnung (10) im Fahrzeugdach (110) durch Ersetzen mindestens eines Bereiches (111, 112) des vorhandenen Fahrzeugdaches (110) durch ein Ersatzbauteil (E1, E2, E3) bereitgestellt wird.

5. Verfahren nach einem der vorhergehenden Ansprüche,
**dadurch gekennzeichnet,**
**dass** das Verfahren mindestens einen weiteren Schritt aufweist:
c) Anbringen eines Adapterrahmens (20) für ein Fenster (30) an der Öffnung (10) im Fahrzeugdach (110), vorzugsweise von einer Innenseite (I) des Fahrzeugdaches (110),
wobei insbesondere der Adapterrahmen (20) mindestens ein Dichtungselement (21) für die Öffnung (10), ein Insektenschutzelement (22) für die Öffnung (10), ein Verschattungselement (23) für ein Fenster (30) oder ein Verstärkungselement (24) zumindest in einer Fahrzeuglängsachse (x), in einer Fahrzeugquerachse (y) oder in einer Fahrzeughochachse (z) für das Fahrzeugdach (110) trägt.

6. Verfahren nach einem der vorhergehenden Ansprüche,
**dadurch gekennzeichnet,**
**dass** das Verfahren mindestens einen weiteren Schritt aufweist:
d) Anbringen eines Fensters (30), vorzugsweise von einer Außenseite (A) des Fahrzeugdaches (110), und Befestigen des Fensters (30) an einem Adapterrahmen (20) an der Öffnung (10) im Fahrzeugdach (110),
wobei insbesondere der Adapterrahmen (20) dazu dient, das Fenster (30) klappbar oder verschiebbar am Adapterrahmen (20) zu befestigen oder fest im Adapterrahmen (20) anzubringen.

7. Verfahren nach einem der vorhergehenden Ansprüche,
**dadurch gekennzeichnet,**
**dass** das Verfahren mindestens einen weiteren Schritt aufweist:
e) Anbringen einer Innenverkleidung (40) von einer Innenseite (I) des Fahrzeugdaches (110), die an die Öffnung (10) angepasst ist,
wobei insbesondere die Innenverkleidung (40) mindestens ein Funktionselement (41), ein Beleuchtungselement (42), ein Ablageelement (43, 49) oder einen Liegeplatz (44), bspw. in Form eines stationären oder ausbaubaren Dachbodens, umfasst.

8. Verfahren nach einem der vorhergehenden Ansprüche,
**dadurch gekennzeichnet,**
**dass** im Schritt a) eine erste Öffnung (10.1) im Bereich (111) der Fahrerkabine (101), insbesondere zwischen den B-Säulen (B) des Fahrzeuges (100) und einer Windschutzscheibe (103) der Fahrerkabine (101), bereitgestellt wird,
wobei bevorzugt eine zweite Öffnung (10.2) im Bereich (112) eines Nutzraumes (102), insbesondere zwischen den B-Säulen (B) und den C-Säulen (C) des Fahrzeuges (100), bereitgestellt wird,
wobei vorzugsweise eine Kombinationsöffnung (10.3) im Bereich (111) der Fahrerkabine (101), insbesondere zwischen den B-Säulen (B) des Fahrzeuges (100) und einer Windschutzscheibe (103) der Fahrerkabine (101), und im Bereich (112) des Nutzraumes (102), insbesondere zwischen den B-Säulen (B) und den C-Säulen (C) des Fahrzeuges (100), bereitgestellt wird.

9. Fahrzeug (100), insbesondere ein Kleintransporter,
**dadurch gekennzeichnet,**
**dass** das Fahrzeug (100) mithilfe eines Verfahrens nach einem der vorhergehenden Ansprüche umgebaut ist.

10. Fahrzeugdach (110) für ein Fahrzeug (100), insbesondere ein Kleintransporter,
**dadurch gekennzeichnet,**
**dass** im Fahrzeugdach (110) mindestens eine Öffnung (10) zumindest in einem Bereich (111) einer Fahrerkabine (101) des Fahrzeuges (100), insbesondere zwischen den B-Säulen (B) des Fahrzeuges (100) und einer Windschutzscheibe (103) der Fahrerkabine (101) vorgesehen ist.

11. Fahrzeugdach (110) nach dem vorhergehenden Anspruch,
**dadurch gekennzeichnet,**
**dass** die Öffnung (10) im Fahrzeugdach (110) eingeschnitten ist,
und/oder das Fahrzeugdach (110) als ein Ersatzbauteil (E1, E2, E3) mit der Öffnung (10) ausgebildet ist.

12. Fahrzeugdach (110) nach dem vorhergehenden Anspruch,
**dadurch gekennzeichnet,**
**dass** an der Öffnung (10) im Fahrzeugdach (110) ein Adapterrahmen (20) für ein Fenster (30) vorgesehen ist, welches vorzugsweise an einer Innenseite (I) des Fahrzeugdaches (110) befestigt ist,
wobei insbesondere der Adapterrahmen (20) mindestens ein Dichtungselement (21) für die Öffnung (10), ein Insektenschutzelement (22) für die Öffnung (10), ein Verschattungselement (23) für ein Fenster (30) oder ein Verstärkungselement (24) zumindest in einer Fahrzeuglängsachse (x), in einer Fahrzeugquerachse (y) oder in einer Fahrzeughochachse (z) für das Fahrzeugdach (110) aufweist,
wobei vorzugsweise der Adapterrahmen (20) aus einem Metalllegierung, bspw. Stahl, oder aus einem Leichtmetall, bspw. Aluminium oder Magnesium, oder aus einem Kunststoff, bspw. Hartplastik oder Duroplast, vorzugsweise aus einem faserverstärkten Kunststoff ausgebildet ist.

13. Fahrzeugdach (110) nach einem der vorhergehenden Ansprüche,
**dadurch gekennzeichnet,**
**dass** an der Öffnung (10) im Fahrzeugdach (110) ein Fenster (30), vorzugsweise von einer Außenseite (A) des Fahrzeugdaches (110), angebracht und an einem Adapterrahmen (20) befestigt ist,
wobei insbesondere der Adapterrahmen (20) mit einem Befestigungsmechanismus (25) ausgelegt ist, um das Fenster (30) klappbar oder verschiebbar am Adapterrahmen (20) zu befestigen oder fest im Adapterrahmen (20) anzubringen,
wobei bevorzugt das Fenster (30) mindestens mehrschichtig oder mehrfach verglast, vorzugsweise mit einer Außenscheibe (30a) und einer Innenscheibe (30b), ausgebildet ist,
wobei vorzugsweise das Fenster (30) mindestens eine, insbesondere mechanisch und/oder elektrisch steuerbare, Funktionsschicht (31) oder eine Anzeigeeinheit (32) zum Bereitstellen von Informationen aufweist.

14. Fahrzeugdach (110) nach einem der vorhergehenden Ansprüche,
**dadurch gekennzeichnet,**
**dass** an einer Innenseite (I) des Fahrzeugdaches (110) eine Innenverkleidung (40) angeordnet ist, die an die Öffnung (10) angepasst ist,
wobei insbesondere die Innenverkleidung (40) mindestens ein Funktionselement (41), ein Beleuchtungselement (42), ein Ablageelement (43, 49) oder einen Liegeplatz (44), bspw. in Form eines stationären oder ausbaubaren Dachbodens, aufweist.

15. Fahrzeugdach (110) nach einem der vorhergehenden Ansprüche,
**dadurch gekennzeichnet,**
**dass** eine erste Öffnung (10.1) im Bereich (111) einer Fahrerkabine (101) des Fahrzeuges (100), insbesondere zwischen den B-Säulen (B) des Fahrzeuges (100) und einer Windschutzscheibe (103) der Fahrerkabine (101 ), ausgebildet ist,
wobei bevorzugt eine zweite Öffnung (10.2) im Bereich (112) eines Nutzraumes (102), insbesondere zwischen den B-Säulen (B) und den C-Säulen (C) des Fahrzeuges (100), ausgebildet ist,
wobei vorzugsweise eine Kombinationsöffnung (10.3) im Bereich (111) einer Fahrerkabine (101) des Fahrzeuges (100), insbesondere zwischen den B-Säulen (B) des Fahrzeuges (100) und einer Windschutzscheibe (103) der Fahrerkabine (101), und im Bereich (112) des Nutzraumes (102), insbesondere zwischen den B-Säulen (B) und den C-Säulen (C) des Fahrzeuges (100), ausgebildet ist.
